# EUROPÄISCHE PATENTSCHRIFT

(11) **EP 0 532 526 B1**
(45) Veröffentlichungstag und Bekanntmachung des Hinweises auf die Patenterteilung: **09.11.1994**
(21) Anmeldenummer: 91909297.3
(22) Anmeldetag: 10.05.1991
(51) Int. Cl.: H02K 15/12, H02K 19/34, H02K 16/00, H02K 9/22

(54) **VERFAHREN ZUR HERSTELLUNG DES STÄNDERS EINER ELEKTRISCHEN MASCHINE, VORZUGSWEISE DREHSTROMGENERATOR**
PROCESS FOR THE MANUFACTURE OF THE STATOR OF AN ELECTRICAL MACHINE, PREFERABLY A THREE-PHASE ALTERNATOR
PROCEDE POUR LA FABRICATION DU STATOR D'UNE MACHINE ELECTRIQUE, DE PREFERENCE D'UN ALTERNATEUR TRIPHASE

(30) Priorität: 06.06.1990 DE 4018089
(43) Veröffentlichungstag der Anmeldung: 24.03.1993
(73) Patentinhaber: ROBERT BOSCH GMBH, 70442 Stuttgart (DE)
(72) Erfinder: SCHÄFTLMEIER, Roland, D-7057 Winnenden (DE); PFLÜGER, Gerhard, D-7145 Markgröningen (DE); FAKLER, Bernhard, D-7300 Esslingen (DE); BÜRGER, Klaus, Georg, D-7145 Markgröningen (DE); KNORPP, Albrecht, D-7141 Murr (DE)
(86) Internationale Anmeldenummer: DE9100385
(87) Internationale Veröffentlichungsnummer: WO9119347

(56) Entgegenhaltungen:
- EP-A- 0 231 785
- EP-A-00 627 06
- DE-U- 8 915 212
- FR-A- 2 218 675
- US-A- 1 584 502
- US-A- 3 758 799
- PATENT ABSTRACTS OF JAPAN, vol. 10, no. 27 (E-378)(2084), 4 February 1986 ; & JP-A-60 187 250

## Beschreibung

### Stand der Technik

Die Erfindung geht aus von einem Herstellverfahren für den Ständer einer elektrischen Maschine, vorzugsweise eines Drehstromgenerators für Fahrzeuge nach dem Oberbegriff des Patentanspruchs 1.

Aus der JP-GM 57-65570 ist bereits bekannt, das Statorgehäuse eines Elektromotors zur Wärmeabführung mit Kühlrippen zu versehen, die gemeinsam mit den ringförmigen Räumen an den Wickelköpfen der Statorwicklung mit einem wärmeleitenden Formharz ausgefüllt sind, nachdem zuvor das Statorblechpaket mit der Statorwicklung in das Gehäuse eingesetzt worden ist. Die Wickelköpfe sind dabei in dem Formharz vollständig eingebettet, so daß die in ihnen erzeugte Verlustwärme nach außen abgeführt werden kann. Nachteilig ist bei einer derartig hergestellten elektrischen Maschine, daß zum Einbetten der Wickelköpfe in wärmeleitenden Kunststoff der komplette vorgefertigte Stator mitsamt seinem Gehäuse in eine Preß- oder Gießform eingesetzt werden muß, was besondere Maßnahmen zur Abdichtung der Gieß- oder Preßform erfordert. Noch aufwendiger wird eine solche Lösung dann, wenn die elektrische Maschine zwei axial hintereinander liegende Ständerblechpakete mit Ständerwicklungen hat und wenn zudem diese Systeme in einem topfförmigen Ständergehäuse eingesetzt werden müssen.

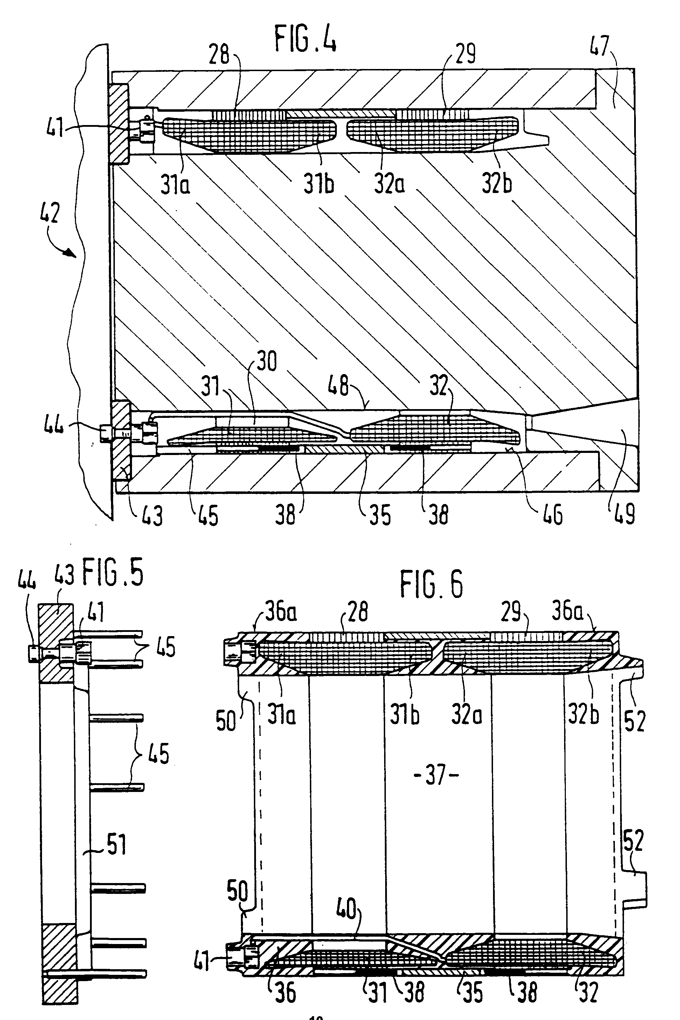

Aus der DE-OS 31 28 081 ist ein solcher Drehstromgenerator für Kraftfahrzeuge mit einem Doppel-Generatorsystem in einem geschlossenen, wassergekühlten Gehäuse bekannt (Figur 5), wobei die Wickelköpfe der beiden Systeme freiliegen. Durch die relativ schlechte Wärmeableitung an den Wickelköpfen ist folglich die Leistung einer solchen elektrischen Maschine begrenzt, und sie baut im Außendurchmesser relativ groß. Außerdem werden dort die beiden Ständerblechpakete von beiden Seiten her in das zylindrische Ständergehäuse eingesetzt, was bei einer topfförmigen Ausführung des Gehäuses nicht mehr realisierbar ist.

Aus der JP-A- 60-18 72 50 ist schließlich bekannt, zwei Ständerblechpakete von einer Seite her axial hintereinander in ein rohrförmiges Ständergehäuse einzusetzen, welches nach dem Einsetzen des Läufers beidseitig durch Lagerdeckel abgeschlossen wird. Dort sind jedoch keine Maßnahmen zur Abführung von Verlustwärme vorgesehen.

Mit der vorliegenden Lösung wird angestrebt, bei oberflächengekühlten elektrischen Maschinen mit zwei axial hintereinander liegenden Ständersystemen den Ständer bei guter Wärmeabführung und kompakter Bauweise möglichst kostengünstig herstellen und montieren zu können.

### Vorteile der Erfindung

Die erfindungsgemäße elektrische Maschine mit den kennzeichnenden Merkmalen des Patentanspruchs 1 hat den Vorteil, daß die beiden Ständersysteme in einer Preßform durch den die Wickelköpfe der Ständerwicklungen einbettenden wärmeleitenden Kunststoff zu einer Baueinheit vorgefertigt werden, auf die dann ein ebenfalls vorgefertigtes zylindrisches oder topfförmiges Gehäuse aufgeschrumpft werden kann, so daß aufwendige Preßformen oder Montagevorrichtungen entfallen. Da der Kunststoff ebenso wie die Ständerblechpakete nach der Montage an der Innenfläche des Maschinengehäuses flächig anliegen, wird eine gute Wärmeableitung von den Wickelköpfen zum Gehäuse hin gewährleistet. Ein weiterer Vorteil besteht darin, daß die Anschlußteile für die Anschlußleitungen der beiden Ständerwicklungen beim Umpressen der Wickelköpfe in dem wärmeleitenden Kunststoff schüttelfest und korrosionsbeständig mitverankert werden.

Durch die in den Unteransprüchen aufgeführten Maßnahmen ergeben sich vorteilhafte Weiterbildungen und Verbesserungen der im Patentanspruch 1 angegebenen Merkmale. So ist es besonders vorteilhaft, als Bodenteil des Preßwerkzeuges eine Ringscheibe zu verwenden, die den Raum zwischen innerer und äußerer Ringwand des Preßwerkzeuges abschließt und auf den die Anschlußteile für die Anschlußleitungen der Ständerwicklungen in Form von Gewindebuchsen vor dem Gießpreßvorgang mit Schrauben befestigt werden. Dabei ist es besonders zweckmäßig, wenn die Enden der Anschlußleiter jeweils auf einer ebenen Fläche eines sechseckigen Abschnittes der Gewindebuchsen angeschweißt werden, welcher später im wärmeleitenden Kunststoff eingebettet wird. Besonders zweckmäßig ist bei dieser Ausführung, wenn die vordere Stirnseite des vorderen Ständerblechpaketes vor der Kunststoffumpressung im Preßwerkzeug auf mehrere am Umfang der Ringscheibe befestigte Distanzstifte so aufgesetzt wird, daß die Anschlußteile vor dem vorderen Wickelkopf in dem wärmeleitenden Kunststoff schüttelfest und korrosionsbeständig eingebettet werden. Dabei werden zweckmäßigerweise je vier Anschlußteile für jede der beiden Drehstrom-Ständerwicklungen nebeneinander zu einer Anschlußgruppe in dem wärmeleitenden Kunststoff eingebettet.

### Zeichnung

Ein Ausführungsbeispiel der Erfindung ist in der Zeichnung dargestellt und in der nachfolgenden Beschreibung näher erläutert. Es zeigen Figur 1 einen Drehstromgenerator für Kraftfahrzeuge mit zwei Generator-Systemen, teilweise im Querschnitt, Figur 2 zeigt die zwei vormontierten Ständerblechpakete des Generators mit den Ständerwicklungen und dem Bodenteil des Preßwerkzeuges, Figur 3a zeigt ein Anschlußteil und Figur 3b die Anbringung einer Anschlußleitung der Ständerwicklung an dem Anschlußteil, Figur 4 zeigt die vormontierten zwei Ständersysteme in dem Preßwerkzeug, Figur 5 zeigt das Bodenteil des Preßwerkzeuges und Figur 6 die fertige kunststoffumspritzte Baueinheit des Generatorständers.

### Beschreibung des Ausführungsbeispiels

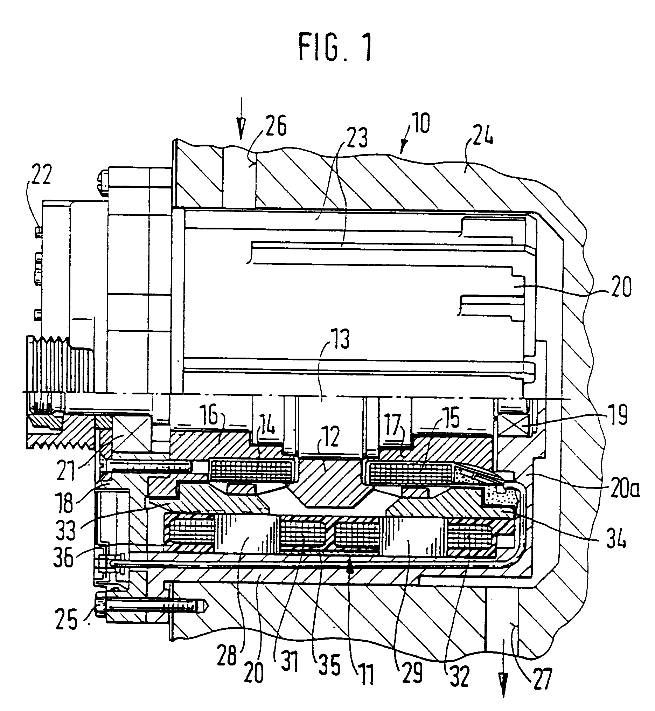

In Figur 1 ist ein Drehstromgenerator zur Stromversorgung von Kraftfahrzeugen, Baumaschinen und dergleichen mit 10 bezeichnet. Er besteht aus einem Ständer 11, auch Stator genannt, einem Doppel-Leitstückläufer 12 in Klauenpolausführung, der auf einer Antriebswelle 13 befestigt ist, sowie aus zwei Erregerwicklungen 14, 15, welche auf zwei Polringen 16, 17 angeordnet und am Gehäuseboden 20a bzw. an einem vorderen Lagerdeckel 18 befestigt sind. Das hintere Ende der Antriebswelle 13 ist in einem ersten Kugellager 19 am Boden 20a eines topfförmigen Metallgehäuses 20 des Generators 10 aufgenommen. Auf der Antriebseite ist die Antriebswelle 13 über ein weiteres Kugellager 20 im Lagerdeckel 18 aufgenommen, der das Metallgehäuse 20 zur Antriebseite hin abschließt und der die elektrischen Anschlüsse 22 des Drehstromgenerators 10 sowie in nicht erkennbarer Weise eine Gleichrichter- und Regleranordnung trägt. Der flüssigkeitsgekühlte Drehstromgenerator ist außen am Metallgehäuse 20 mit Abstandsrippen 23 versehen und wird - wie angedeutet - in eine entsprechend gestaltete topfförmige Ausnehmung im Aggregat 24 des Fahrzeugs eingesetzt und durch Schrauben 25 daran befestigt. Die Kählflüssigkeit wird über eine Einlaufbohrung 26 zur Außenfläche des Metallgehäuses 20 geführt, um die im Generator 10 erzeugte Wärme aufzunehmen und über eine Auslaufbohrung 27 in den Kählkreislauf der Maschine abzuführen.

Der Ständer 11 des Drehstromgenerators 10 enthält zwei axial hintereinander liegende Ständerblechpakete 28, 29, in deren Nuten 30 jeweils die Ständerwicklungen 31, 32 eingelegt und miteinander im Stern oder auf andere Weise verschaltet sind. Die Ständerwicklungen 31, 32 wirken jeweils mit dem Doppel-Leitstückläufer 12 zusammen, der zwei Klauenpolsysteme 33, 34 aufweist. Die zwei Ständerblechpakete 28 und 29 werden durch einen Metall-Distanzring 35 zueinander auf Abstand gehalten und um eine halbe Nutteilung gegeneinander versetzt positioniert. Sie sind zusammen mit den Wickelköpfen der Ständerwicklungen 31 und 32 in einem wärmeleitenden Kunststoff 36 zu einer vorgefertigten Baueinheit 37 eingebettet.

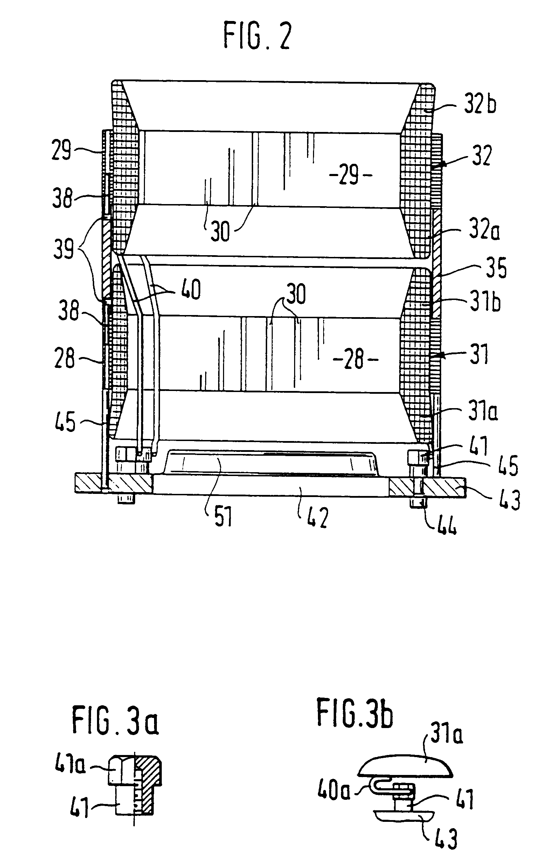

In den Figuren 2 - 5 sind die verschiedenen Schritte zur Herstellung dieser Baueinheit 37 dargestellt. Gemäß Figur 2 werden dabei zunächst die zwei Ständerblechpakete 31 und 32 durch den Distanzring 35 axial auf Abstand gehalten und durch mehrere an den einander zugewandten Stirnseiten der beiden Ständerblechpakete 28, 29 am Umfang verteilte Positionierstifte 38 zueinander fixiert. Dabei werden die Positionierstifte 38 in Bohrungen der Ständerblechpakete eingepreßt. Sie greifen mit ihren freien Enden in entsprechend gestaltete Ausnehmungen 39 an den Stirnseiten des Distanzringes 35 ein. Die Ausnehmungen 39 sind dabei so angeordnet, daß die beiden Ständerblechpakete 28, 29 gegeneinander um eine halbe Nutteilung versetzt in Position gehalten werden. Außerdem werden bei dieser Positionierung der Ständerblechpakete 31, 32 die Anschlußleiter 40 der hinteren Ständerwicklung durch Nuten 30 des vorderen Ständerblechpaketes 28 nach vorn bzw. unten zur Anschlußseite der Maschine hindurchgeführt. Die Enden 40a der Anschlußleiter 40 werden dabei jeweils auf einer ebenen Fläche eines sechseckigen Abschnittes 41a von in Figur 3a vergrößert dargestellten Gewindebuchsen 41 kontaktiert, welche die Anschlußteile des Ständers 11 bilden. Diese Anschlußteile werden zunächst auf ein als Bodenteil eines in Figur 4 dargestellten Preßwerkzeuges 42 ausgebildeten Ringscheibe 43 mit Schrauben 44 befestigt, und die Enden 40a der Anschlußleiter 40 werden gemäß Figur 3b zunächst vorgebogen. Die Ringscheibe 43 trägt ferner gemäß Figur 5 mehrere an ihrem Umfang verteilte Distanzstifte 45, auf welche nun die vordere Stirnseite des vorderen/unteren Ständerblechpaketes 28 so aufgesetzt wird, daß die Anschlußteile 41 vor dem vorderen/unteren Wickelkopf 31a positioniert sind. Nunmehr sind je vier Anschlußteile bzw. Gewindebuchsen 41 für jede der beiden Ständerwicklungen 31, 32 nebeneinander zu einer Anschlußgruppe zusammengefaßt, wobei diese beiden Anschlußgruppen einander gegenüberliegen. Die vorgebogenen Enden 41a der Anschlußleiter 40 können nun jeweils an einer ebenen Fläche der sechseckförmigen Abschnitte 41a der Gewindebuchsen 40 angeschweißt werden.

Gemäß Figur 4 werden sodann die beiden vormontierten Ständerblechpakete 28, 29 an ihrem Außendurchmesser mitsamt dem Distanzring 35 in eine äußere Ringwand 46 des Preßwerkzeuges 42 eingesetzt, die bis zu der Ringscheibe 43 als Bodenteil des Preßwerkzeuges 42 reicht. Sodann werden mit einem axial geführten Stempel 47 des Preßwerkzeuges 42 die Ständerblechpakete 28, 29 an ihrem Innendurchmesser von einer inneren Ringwand 48 aufgenommen. Die Ringscheibe 43 als Bodenteil des Preßwerkzeuges 42 schließt dabei den Raum zwischen innerer und äußerer Ringwand 48, 46 ab. Über einen Zulauf 49 des Stempels 47 wird nun ein wärmeleitender Kunststoff, z. B. ein mit Glasfasern versetzter Polyester-Kunststoff, in heißem Zustand unter hohem Druck zwischen innerer und äußerer Ringwand 48, 46 eingepreßt, so daß dabei die Ständerblechpakete 28, 29, der Distanzring 35, die Wickelköpfe 31a, 31b, 32a und 32b sowie die Gewindebuchsen 41 in dem wärmeleitenden Kunststoff 36 gemäß Figur 6 eingebettet und verankert werden. Dabei werden die zwei einander gegenüberliegenden Anschlußgruppen in je einem axialen Vorsprung 50 des wärmeleitenden Kunststoffs 36 eingebettet, was dadurch erreicht wird, daß die Ringscheibe 43 im Boden des Preßwerkzeuges 42 jeweils mit einem Kragenabschnitt 51 zwischen den zwei Anschlußgruppen versehen ist, der bis dicht vor den vorderen Wickelkopf 31a reicht. In entsprechender Weise sind auch im Bereich des hinteren Wickelkopfes 32b durch eine entsprechende Formgebung des Stempels 47 Vorsprünge 52 an der Kunststoffumpressung 36 des Wickelkopfes 31b angeformt.

Nach dem Aushärten des wärmeleitenden Kunststoffes 36 wird das Preßwerkzeug 42 geöffnet, die Schrauben 44 werden aus den Gewindebuchsen 41 entfernt, und die Ringscheibe 43 mit den Distanzstiften 45 wird anschließend von der vorderen Stirnseite der nun fertiggestellten Ständer-Baueinheit 37 abgezogen. Die aus dem Preßwerkzeug 42 entnommene, in Figur 6 dargestellte Ständer-Baueinheit 37 wird anschließend in das erhitzte topfförmige Metallgehäuse 20 eingeschoben, wobei die Vorsprünge 52 des wärmeleitenden Kunststoffs 36 am hinteren Wickelkopf 32b als Anschlag am Boden 20a des topfförmigen Metallgehäuses 20 dienen. Durch einen Schrumpfvorgang wird anschließend das Metallgehäuse 20 wärmeleitend auf die äußeren Ringflächen 36a des wärmeleitenden Kunststoffes 36, auf die Ständerblechpakete 31, 32 und den Distanzring 35 aufgeschrumpft.

## Patentansprüche

1. Verfahren zur Herstellung einer elektrischen Maschine, vorzugsweise eines Drehstromgenerators (10) für Fahrzeuge mit zwei mit Abstand axial hintereinander in einem oberflächengekühlten Metallgehäuse (20) eingesetzten Ständerblechpaketen (28, 29), in deren Nuten (30) jeweils eine Ständerwicklung (31, 32) eingelegt ist und die mit zwei Klauenpolsystemen (33, 34) zusammenwirken, die auf einer an den gegenüberliegenden Stirnseiten der Maschine gelagerten Antriebswelle (13) angeordnet sind, wobei die stirnseitig vorstehenden Wickelköpfe (31a, 31b; 32a, 32b) der Ständerwicklungen von dem Metallgehäuse zur Wärmeabführung umgeben sind, dadurch gekennzeichnet,
a) daß die die Ständerwicklungen (31, 32) tragenden zwei Ständerblechpakete (28, 29) zunächst zum Einsetzen in ein Preßwerkzeug (42) mit Abstandsmitteln (35) zueinander positioniert werden, wobei die Anschlußleiter (40) der hinteren Ständerwicklung (32) durch Nuten (30) des vorderen Ständerblechpaketes (28) hindurchgeführt werden,
b) daß an einem Bodenteil (43) des Preßwerkzeuges (42) Anschlußteile (41) für die Ständerwicklungen (31, 32) lösbar befestigt werden, wobei die Anschlußteile (41) mit Anschlußleitern (40) der Ständerwicklungen (31, 32) kontaktiert werden.
c) daß die beiden Ständerblechpakete (28, 29) an ihrem Außendurchmesser mit den Abstandsmitteln (35) in eine äußere Ringwand (48) des Preßwerkzeuges (42) eingesetzt sowie mit einem axial geführten Stempel (47) des Preßwerkzeuges (42) die Ständerblechpakete (28, 29) an ihrem Innendurchmesser von einer inneren Ringwand (48) des Preßwerkzeuges (42) aufgenommen werden und
d) daß ein wärmeleitender Kunststoff (36) im heißen Zustand zwischen innerer und äußerer Ringwand (48, 46) eingepreßt wird, so daß dabei die Ständerblechpakete (28, 29), die Abstandsmittel (35), die Wickelköpfe (31a, 31b, 32a, 32b) und die Anschlußteile (41) zu einer Baueinheit (37) in dem wärmeleitenden Kunststoff (36) eingebettet und/oder verankert werden.

2. Verfahren nach Anspruch 1, dadurch gekennzeichnet, daß als Bodenteil (43) des Preßwerkzeuges (42) eine Ringscheibe dient, die den Raum zwischen innerer und äußerer Ringwand (48, 46) abschließt und auf der die Anschlußteile (41) in Form von Gewindebuchsen mit Schrauben (44) lösbar befestigt werden.

3. Verfahren nach Anspruch 2, dadurch gekennzeichnet, daß die Enden (40a) der Anschlußleiter (40) der Ständerwicklungen (31, 32) auf einer ebenen Fläche eines sechseckigen Abschnittes (41a) der Gewindebuchsen (41) angeschweißt werden, der später im wärmeleitenden Kunststoff (36) eingebettet wird.

4. Verfahren nach einem der vorherigen Ansprüche, dadurch gekennzeichnet, daß die vordere Stirnseite des vorderen Ständerblechpaketes (28) vor der Kunststoffumpressung im Preßwerkzeug (42) auf mehrere am Umfang des Bodenteiles (43) befestigte Distanzstifte (45) so aufgesetzt wird, daß die Anschlußteile (41) vor dem vorderen Wickelkopf (31a) im wärmeleitenden Kunststoff eingebettet werden.

5. Verfahren nach einem der vorherigen Anspruche, dadurch gekennzeichnet, daß je vier Anschlußteile (41) für jede der beiden Ständerwicklungen (31, 32) zu einer Anschlußgruppe im wärmeleitenden Kunststoff (36) eingebettet werden.

6. Verfahren nach Anspruch 5, dadurch gekennzeichnet, daß die zwei einander gegenüberliegenden Anschlußgruppen in je einem axialen Vorsprung (50) des wärmeleitenden Kunststoffs (36) eingebettet werden, wobei jeweils zwischen den zwei Anschlußgruppen das Bodenteil (43) am Boden des Preßwerkzeuges (42) mit zwei Kragenabschnitten (51) bis dicht vor den vorderen Wickelkopf (31a) der Maschine reicht.

7. Verfahren nach Anspruch 1, dadurch gekennzeichnet, daß die beiden Ständerblechpakete (28, 29) durch einen wärmeleitenden Distanzring (35) axial zueinander auf Abstand gehalten werden.

8. Verfahren nach Anspruch 7, dadurch gekennzeichnet, daß an den einander zugewandten Stirnseiten der beiden Ständerblechpakete (28, 29) mehrere am Umfang verteilte Positionierstifte (38) in Bohrungen der Blechpakete (28, 29) eingepreßt werden und in entsprechende Ausnehmungen (39) an den Stirnseiten des Distanzringes (35) derart eingreifen, daß die beiden Ständerblechpakete (28, 29) um eine halbe Nutteilung gegeneinander versetzt in Position gehalten werden.

## Claims

1. Process for producing an electrical machine, preferably an alternator (10) for vehicles having two stacks of stator laminations (28, 29) which are inserted at a spacing axially one behind the other in a surface-cooled metal housing (20) and into the grooves (30) of which in each case one stator winding (31, 32) is inserted and which cooperate with two claw pole systems (33, 34) which are disposed on a drive shaft (13) mounted at the opposite end faces of the machine, the coil heads (31a, 31b; 32a, 32b), projecting at the end face, of the stator windings being surrounded by the metal housing to conduct heat away, characterized in that
a) the two stacks of stator laminations (28, 29) carrying the stator windings (31, 32) are positioned in the first instance by spacing means (35) in relation to one another for insertion into a pressing tool (42), the leads (40) of the rear stator winding (32) being guided through grooves (30) of the front stack of stator laminations (28),
b) connecting parts (41) for the stator windings (31, 32) are releasably secured to a base part (43) of the pressing tool (42), the connecting parts (41) being contacted with leads (40) of the stator windings (31, 32),
c) the two stacks of stator laminations (28, 29) are inserted at their external diameter with the spacing means (35) into an outer annular wall (48) of the pressing tool (42) and with an axially guided punch (47) of the pressing tool (42) the stacks of stator laminations (28, 29) are received at their internal diameter by an inner annular wall (48) of the pressing tool (42), and
d) a thermally conductive plastic material (36) is pressed in the hot condition between the inner and outer annular wall (48, 46), so that in this case the stacks of stator laminations (28, 29), the spacing means (35), the coil heads (31a, 31b, 32a, 32b) and the connecting parts (41) are embedded and/or anchored in the thermally conductive plastic material (36) to form a structural unit (37).

2. Process according to Claim 1, characterized in that the base part (43) of the pressing tool (42) comprises an annular disc which closes off the space between the inner and outer annular wall (48, 46) and on which the connecting parts (41) in the form of threaded bushes are releasably secured by screws (44).

3. Process according to Claim 2, characterized in that the ends (40a) of the leads (40) of the stator windings (31, 32) are welded on a plane surface of a hexagonal portion (41a) of the threaded bushes (41), which portion is later embedded in the thermally conductive plastic material (36).

4. Process according to one of the preceding claims, characterized in that the front end face of the front stack of stator laminations (28) is fitted, before the plastic material is pressed around in the pressing tool (42), onto a plurality of spacer pins (45) secured to the periphery of the base part (43), so that the connecting parts (41) are embedded ahead of the front coil head (31a) in the thermally conductive plastic material.

5. Process according to one of the preceding claims, characterized in that in each case four connecting parts (41) for each of the two stator windings (31, 32) are embedded in the thermally conductive plastic material (36) to form a connection set.

6. Process according to Claim 5, characterized in that the two mutually opposite connection sets are embedded in in each case one axial projection (50) of the thermally conductive plastic material (36), in each instance between the two connection sets the base part (43) at the base of the pressing tool (42) extending by two collar portions (51) to closely in front of the front coil head (31a) of the machine.

7. Process according to Claim 1, characterized in that the two stacks of stator laminations (28, 29) are held in a spacing axially relative to one another by a thermally conductive spacer ring (35).

8. Process according to Claim 7, characterized in that at the mutually facing end faces of the two stacks of stator laminations (28, 29) a plurality of positioning pins (38) distributed at the periphery are pressed into bores of the stacks of laminations (28, 29) and engage into corresponding recesses (39) at the end faces of the spacer ring (35) in such a manner that the two stacks of stator laminations (28, 29) are held in position, offset relative to one another by half a groove pitch.

## Revendications

1. Procédé pour la fabrication d'un moteur électrique de préférence un alternateur triphasé (10) pour véhicules avec deux paquets de tôles de stator (28, 29) insérés à distance l'un de l'autre de façon axiale l'un derrière l'autre dans un carter en métal (20) refroidi superficiellement, dans les rainures (30) desquels est respectivement inséré un enroulement de stator (31, 32) et qui coopèrent avec deux systèmes de pôles à griffes (33, 34), qui sont disposés sur un arbre d'entraînement (13) monté sur les côtés latéraux se faisant vis-à-vis du moteur, les têtes d'enroulement saillant du côté frontal (31a, 31b, 32a, 32b) des enroulements du stator étant entourées par le carter en métal servant à évacuer la chaleur, procédé caractérisé en ce que
a) on positionne l'un par rapport à l'autre les deux paquets de tôles du stator (28, 29) portant les enroulements de stator (31, 32) d'abord pour les insérer dans un outil de pressage (42) avec des moyens d'écartement (35) en faisant passer les fils de raccordement (40) de l'enroulement arrière du stator (32) à travers des rainures (30) du paquet de tôles antérieur du stator (28).
b) on fixe de manière détachable sur une pièce servant de fond (43) de l'outil de pressage (42) des pièces de raccordement (41) pour les enroulements du stator (31, 32), les pièces de raccordement (41) étant mises en contact avec les fils de raccordement (40) des enroulements du stator (31,32).
c) on insère les deux paquets de tôles du stator (28,29) par leur diamètre extérieur avec les moyens d'écartement (35) dans une paroi annulaire extérieure (48) de l'outil de pressage (42) et on loge avec un poinçon guidé axialement (47) de l'outil de pressage (42) les paquets de tôles (28, 29) du stator par leur diamètre intérieur dans une paroi annulaire intérieure (48) de l'outil de pressage (42) et
d) on injecte sous pression une matière plastique conductrice de la chaleur à haute température entre la paroi intérieure et la paroi extérieure (48, 46), de telles sorte que ce faisant les paquets de tôles (28, 29) du stator, les moyens d'écartement (35), les têtes d'enroulement (31a, 31b ; 32a, 32b) et les pièces de raccordement (41) sont noyées et/ou ancrées dans la matière plastique conductrice de la chaleur (36) en formant un bloc.

2. Procédé selon la revendication 1, caractérisé en ce que comme pièce servant de fond (43) à l'outil de pressage (42) on se sert d'un disque annulaire qui ferme l'espace compris entre la paroi annulaire intérieure et la paroi annulaire extérieure (48, 46) et on fixe sur le disque les pièces de raccordement (41) ayant la forme de manchons filetés avec des vis (44) de façon détachable.

3. Procédé selon la revendication 2, caractérisé en ce que les extrémités (40a) des fils de raccordement (40) des enroulements du stator (31, 32) sont soudées sur une surface plane d'une section hexagonale (41a) des manchons filetés (41) qui est noyée ultérieurement dans la matière plastique, conductrice de la chaleur (36).

4. Procédé selon l'une des revendications précédentes, caractérisé en ce que la face frontale antérieure du paquet de tôles antérieur du stator (28) est mis avec l'enrobement sous pression dans l'outil de pressage (42) sur plusieurs tiges d'écartement (45) fixées sur le pourtour de la pièce servant de fond (43) de telle façon que les pièces de raccordement (41) sont noyées devant la tête d'enroulement antérieure (31a) dans la matière plastique conductrice de la chaleur.

5. Procédé selon l'une des revendications précédentes, caractérisé en ce que chacune des quatre pièces de raccordement (41) pour chacun des deux enroulements du stator (31, 32) allant à un groupe de raccordement est noyé dans la matière plastique (36) conductrice de la chaleur.

6. Procédé selon la revendication 5, caractérisé en ce que les deux groupes de raccordement situés vis-à-vis de l'autre sont noyés chacun dans une saillie axiale de la matière plastique conductrice de la chaleur (36), la pièce servant de fond (43) respectivement entre les deux groupes de raccordement sur le fond de l'outil de pressage (42) allant par deux sections en forme de collerette (51) de façon étanche jusque devant la tête antérieure d'enroulement (31a) du moteur.

7. Procédé selon la revendication 1, caractérisé en ce que les deux paquets de tôles (28, 29) du stator sont maintenus à distance l'un de l'autre par une bague d'écartement (35) conductrice de la chaleur, de façon axiale.

8. Procédé selon la revendication 7, caractérisé en ce que sur les faces frontales tournées les unes vers les autres des deux paquets de tôles (28, 29) du stator on enfonce par pressage des tiges de positionnement (38) réparties sur le pourtour dans des perçages des paquets de tôles (28, 29) et on les fait venir en prise dans des évidements correspondants (39) sur les faces frontales de la bague d'écartement (35) d'une manière telle que les deux paquets de tôles (28, 29) du stator sont maintenus décalés en position d'une demie rainure l'une par rapport à l'autre.
